# EUROPEAN PATENT APPLICATION

(11) **EP 2 105 877 A2**
(43) Date of publication of application: **30.09.2009**
(21) Application number: 09004266.4
(22) Date of filing: 25.03.2009
(51) Int. Cl.: G06Q 30/00

(54) **Photograph printing system**

(30) Priority: 28.03.2008 JP 2008087476
(71) Applicant: NORITSU KOKI CO., LTD., Wakayama-shi, Wakayama-ken 640-8550 (JP)
(72) Inventor: Tsuji, Yuki, Wakayama-shi Wakayama-ken 640-8550 (JP); Matsushita, Masayuki, Wakayama-shi Wakayama-ken 640-8550 (JP); Yukawa, Masaaki, Wakayama-shi Wakayama-ken 640-8550 (JP)
(74) Representative: Müller-Boré & Partner Patentanwälte

(57) **Abstract**

When an identification code relating to a subject order is obtained by an acquisition unit, a determination unit determines whether or not printed photographs relating to the subject order are housed in a housing unit. When the determination unit determines that the printed photographs relating to the subject order are not housed in the housing unit, the transmission unit transmits a request for calculation of an expected time to housing to a management server. A notification unit notifies a user of the expected time to housing, transmitted from the management server, as an expected time to delivery of the printed photographs relating to the subject order.

## Description

### BACKGROUND OF THE INVENTION AND RELATED ART STATEMENT

### Field of the Invention:

The present invention relates to a photograph printing system in which a reception device, a management server, and a photograph printing device are connected via a predetermined network.

### Description of the Related Art:

Recently, a delivery device for delivering printed photographs ordered from a user is disposed alongside a photograph printing device in a photograph developing store provided in a corner of a large commercial facility such as a supermarket. For example, when the user causes a barcode reader of the delivery device to read a reception voucher issued by the photograph developing store at the time of order placement, the ordered printed photographs are discharged from the delivery device, and thus the printed photographs can be received without the need to communicate with a staff member.

Further, JP2007-249827 discloses a photograph printing system in which delivery information including information relating to delivery of the printed photographs is displayed on a display of the delivery device.

However, the delivery-related information described in JP2007-249827 relates to a method of delivering the printed photographs relating to the order, and does not inform the user of an expected time to delivery. Therefore, when the user wishes to know the expected time to delivery, he/she must ask a staff member of the photograph developing store, which is troublesome for the user. Moreover, when the user asks the staff member to confirm the expected time to delivery, the staff member must perform an operation to check the expected time to delivery, and since this operation interferes with other work, it is troublesome for the staff member.

### SUMMARY OF THE INVENTION

An object of the present invention is to provide a photograph printing system with which a user can confirm an expected time to delivery of printed photographs easily and the user can be informed of the expected time to delivery of the printed photographs without adding to the labor of a staff member of a photograph developing store.

A photograph printing system according to one aspect of the present invention is a photograph printing system in which a reception device for receiving an order for photograph printing, a management server for managing the order, a photograph printing device for outputting printed photographs relating to the order, and a delivery device for delivering the printed photographs to a user in order units are connected via a predetermined network, wherein the management server includes: an order management unit that manages the orders by creating an order management database indicating whether or not printed photographs relating to respective orders have been housed in the delivery device when the printed photographs relating to each order are housed in the delivery device; and a calculation unit that calculates an expected time to housing required to house printed photographs relating to a single subject order in the delivery device on the basis of the order management database upon reception of a request to calculate the expected time to housing from the delivery device, and transmits the calculated expected time to housing to the delivery device, and the delivery device comprises: a housing unit that houses the printed photographs in order units; an acquisition unit that obtains an identification code attached in advance to identify the subject order; a determination unit that determines whether or not the printed photographs relating to the subject order have been housed in the housing unit when the identification code relating to the subject order is obtained by the acquisition unit; a transmission unit that transmits the request to calculate the expected time to housing to the management server when the determination unit determines that the printed photographs relating to the subject order have not been housed in the housing unit; and a notification unit that notifies the user of the expected time to housing transmitted from the management server as an expected time to delivery of the printed photographs relating to the subject order.

These and other objects, features and advantages of the present invention will become more apparent upon reading the following detailed description along with the accompanying drawings.

### BRIEF DESCRIPTION OF THE DRAWINGS

Fig. 1 is an overall constitutional diagram of a photograph printing system according to an embodiment of the present invention;
Fig. 2 is an external constitutional diagram of a reception device shown in Fig. 1;
Fig. 3 is a block diagram showing the reception device shown in Fig. 2;
Fig. 4 is a block diagram of a photograph printing device shown in Fig. 1;
Fig. 5 is an external constitutional diagram of a delivery device shown in Fig. 1;
Fig. 6 is an external constitutional diagram of the delivery device shown in Fig. 1;
Fig. 7 is a block diagram of the delivery device;
Fig. 8 is a block diagram of a management server shown in Fig. 1;
Fig. 9 is a flowchart showing an operation performed by the photograph printing system during calculation of an expected time to delivery;
Fig. 10 is a view showing an example of a data structure of order information;
Fig. 11 is a view showing an example of a data structure of order notification information;
Fig. 12 is a view showing an example of a data structure of printing output request information; and
Fig. 13 is a view showing an example of a data structure of an order management database stored by a storage unit.

### DETAILED DESCRIPTION OF THE PREFERRED EMBODIMENTS OF THE INVENTION

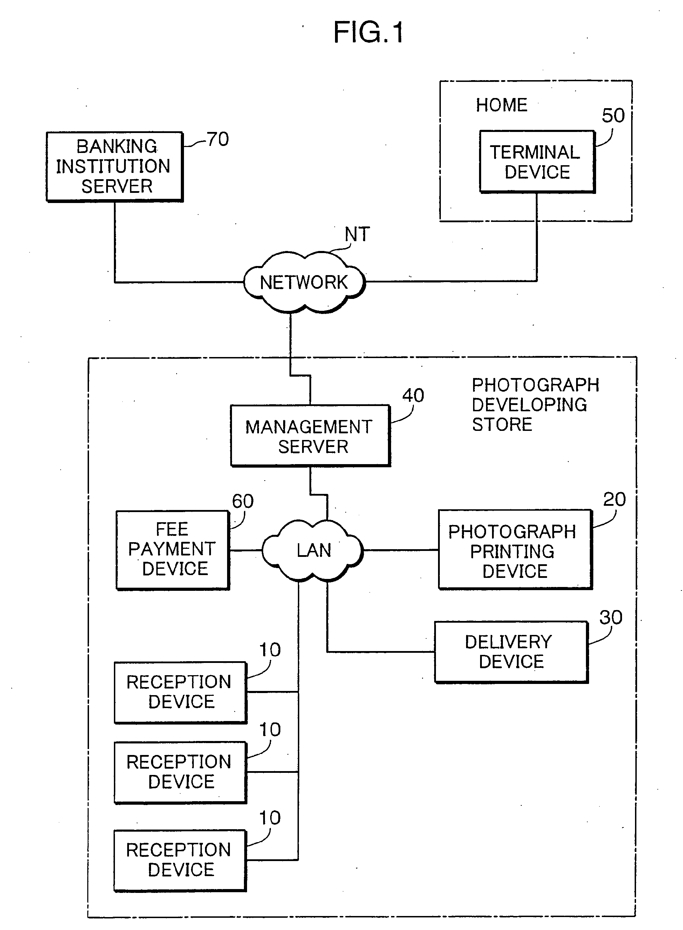

A photograph printing system according to an embodiment of the present invention will be described below with reference to the drawings. Fig. 1 is an overall constitutional diagram of a photograph printing system according to an embodiment of the present invention. The photograph printing system includes a reception device 10, a photograph printing device 20 , a delivery device 30, a management server 40, a terminal device 50, and a fee payment device 60.

The reception device 10, photograph printing device 20, delivery device 30, management server 40, and fee payment device 60 are disposed in a photograph developing store, for example, and connected communicably via a LAN (Local Area Network). The terminal device 50 is connected to the management server 40 and a banking institution server 80 via a network NT. Here, the Internet may be employed as the network NT, for example, such that various data are exchanged in accordance with a TCP/IP communication protocol.

The reception device 10 is a dedicated device for receiving a photograph printing order from a user. Note that in Fig. 1, three reception devices 10 are shown, but the present invention is not limited thereto, and one or a plurality of reception devices 10 may be provided.

The photograph printing device 20 is a device for outputting printed photographs in accordance with an order received by the reception device 10 or the terminal device 50. In this embodiment, a device that exposes photographic paper using a laser system or a device that prints an image on paper using an inkjet system, for example, may be employed.

The delivery device 30 is a device for automatically delivering a printed photograph output by the photograph printing device 20 to the user. The management server 40 is constituted by a computer, for example, and manages orders received by the reception device 10 and the terminal device 50.

The terminal device 50 is constituted by a computer owned by the user, and receives an order for photograph printing from the user. The fee payment device 60 is constituted by a fee payment device having a LAN communication function, which collects a printing fee corresponding to an order from the user. The banking institution server 70 is a device managed by a banking institution specified by the user, and is used when the management server 40 performs electronic payment.

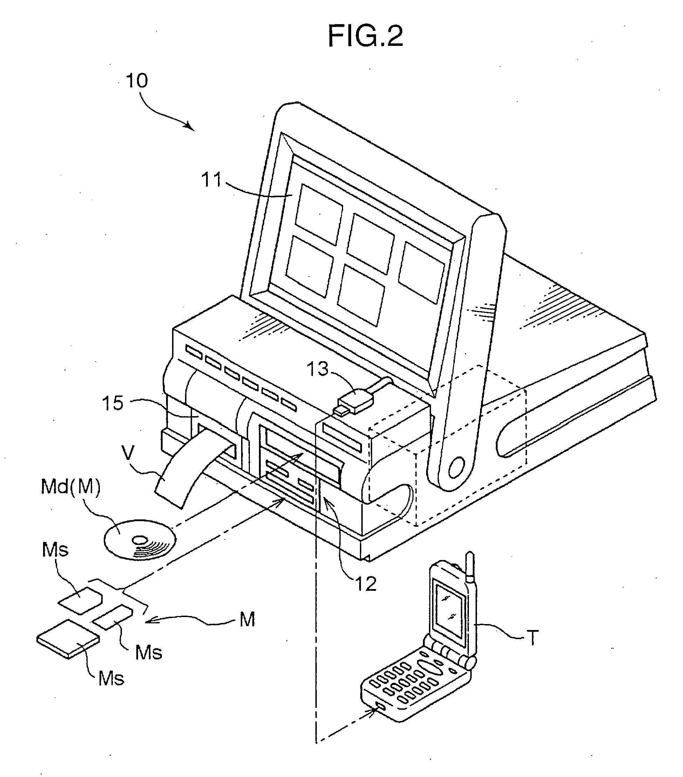

Fig. 2 is an external constitutional diagram of the reception device 10 shown in Fig. 1. As shown in Fig. 2, the reception device 10 includes a display 11, a media drive 12, a connector 13, and a reception voucher printer 15.

The display 11 is constituted by a liquid crystal display device formed with a touch panel on a display surface thereof, for example. The media drive 12 obtains image data from a medium M. In this embodiment, a semiconductor medium Ms such as a compact flash (registered trademark), an SD memory card (registered trademark), or a memorystick(registered trademark) or a disc-shaped medium Md such as a compact disc, a CD-R (CD-Recordable), or an MO (Magnet Optical Disc) may be employed as the medium M. Accordingly, the media drive 12 is constituted by a media drive that corresponds to these respective media M.

The connector 13 is used for connecting a camera-equipped portable telephone T, and obtains image data captured by the portable telephone T. The reception voucher printer 15 issues a reception voucher V proving that an order has been received when the order is received from the user.

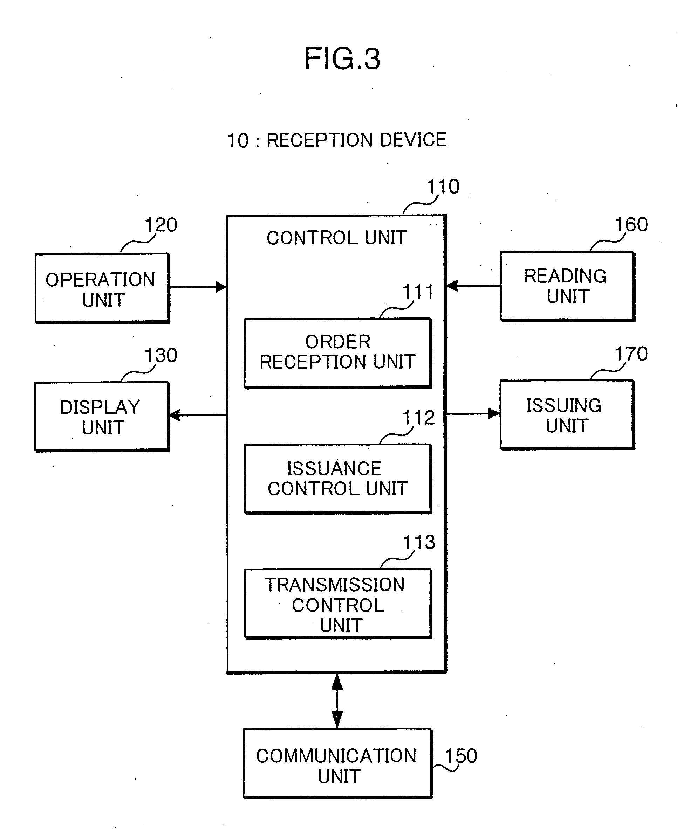

Fig. 3 is a block diagram of the reception device 10 shown in Fig. 2. As shown in Fig. 3, the reception device 10 includes a control unit 110, an operation unit 120, a display unit 130, a communication unit 150, a reading unit 160, and an issuing unit 170.

The control unit 110 is constituted by a CPU (Central Processing Unit), for example, and is responsible for overall control of the reception device 10. In this embodiment in particular, the control unit 110 includes an order reception unit 111 (an example of an order reception unit), an issuance control unit 112, and a transmission control unit 113.

The order reception unit 111 receives an order for photograph printing in accordance with order information that includes personal information relating to the user, which is input by the user by operating the operation unit 120.

Here, the order reception unit 111 displays an operation image on the display unit 130 prompting the user to input the personal information, which includes the name, telephone number, and so on of the user, and obtains the personal information by having the user input the personal information. Next, the order reception unit 111 displays an operation image on the display unit 130 prompting the user to insert the medium M into the media drive 12, whereby the user is caused to insert the medium M into the media drive 12 such that the image data recorded on the medium M are read by the reading unit 160. The order reception unit 111 then displays an operation image on the display unit 130 prompting the user to specify the image data to be printed, from among the image data read by the reading unit 160, and the number of prints of each set of image data (an example of number information). Thus, the order reception unit 111 obtains the personal information, the image data specified by the user, and the number of prints of each set of image data as the order information.

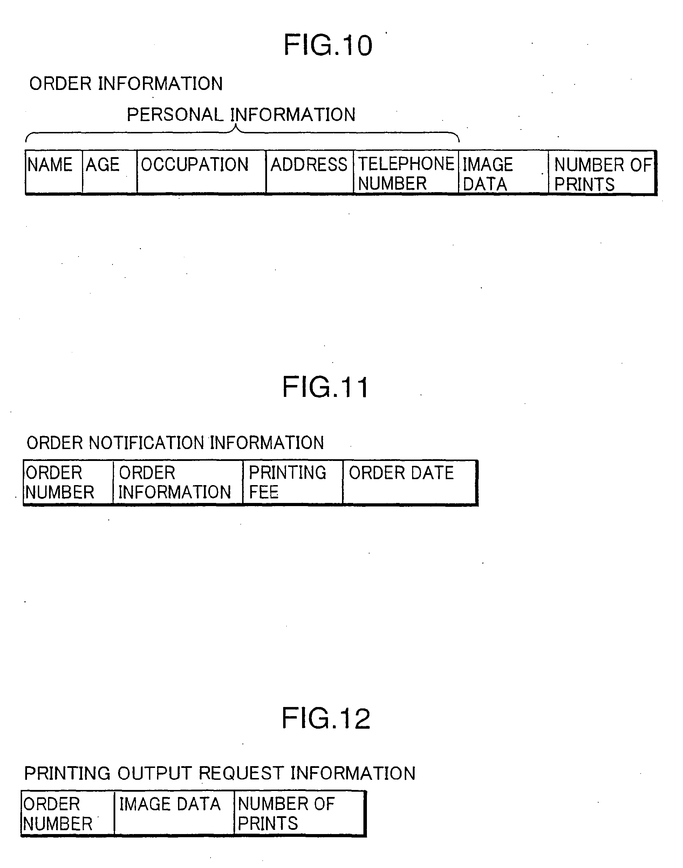

Fig. 10 is a view showing an example of a data structure of the order information. As shown in Fig. 10, the order information includes columns relating to the personal information, the image data, and the number of prints. The personal information column further includes columns relating to name, age, occupation, address, and telephone number. Note that these columns are examples and may be omitted or supplemented with other columns.

Information indicating the name of the user is stored in the name column. Information indicating the age of the user is stored in the age column. Information relating to the occupation of the user is stored in the occupation column. Information indicating the address of the user is stored in the address column. Information indicating the telephone number of the user is stored in the telephone number column. The image data read by the reading unit 160 is stored in the image data column. The number of prints of each set of image data stored in the image data column is stored in the print number column.

Returning to Fig. 3, the order reception unit 111 calculates a printing fee for the order from the number of sets of image data and the number of prints included in the obtained order information, and receives the order on condition that the printing fee is paid by the user. The order reception unit 111 then transmits an order number attachment request to the management server 40 to have an order number (an example of an identification code) attached to the received order. The order reception unit 111 obtains the order number upon reception of an order number attachment notification from the management server 40.

When requesting payment of the printing fee, the order reception unit 111 transmits a payment request to the fee payment device 60. The order reception unit 111 may then determine that the printing fee has been paid upon reception of a payment response that is transmitted from the fee payment device 60 when the user pays the fee.

The issuance control unit 112 issues a reception voucher V by controlling the issuing unit 170 such that the order number relating to the order received by the order reception unit 111 is printed on a sheet of paper.

The transmission control unit 113 generates order notification information from the image data, identification code and order information obtained by the order reception unit 111 in relation to the user, and transmits the generated order notification information to the management server 40.

Fig. 11 is a view showing an example of a data structure of the order notification information. As shown in Fig. 11, the order notification information includes columns relating to the order number, order information, printing fee, and order date. Note that these columns are examples and may be omitted or supplemented with other columns.

The order number attached to the order is stored in the order number column. The order information shown in Fig. 10 is stored in the order information column. The printing fee for the order is stored in the printing fee column. The time, day, month and year in which the order is received are stored in the order date column.

The operation unit 120 is constituted by a touch panel or the like formed on the display 11 shown in Fig. 2, and receives operation input from the user. The display unit 130 is constituted by the display 11 shown in Fig. 2, and under the control of the control unit 110, the display unit 130 displays various images for prompting the user to follow an operation procedure while placing an order.

The communication unit 150 is constituted by a communication device that conforms to a LAN communication protocol, and under the control of the control unit 110, the communication unit 150 transmits and receives various data. In this embodiment in particular, the communication unit 150 transmits an order number attachment request and order notification information to the management server 40 and receives an order number attachment notification transmitted by the management server 40.

The reading unit 160 is constituted by the media drive 12 and the connector 13 shown in Fig. 2, and under the control of the control unit 110, the reading unit 150 obtains image data that the user wishes to be subjected to photograph printing. The issuing unit 170 is constituted by the reception voucher printer 15 shown in Fig. 2, and issues the reception voucher V.

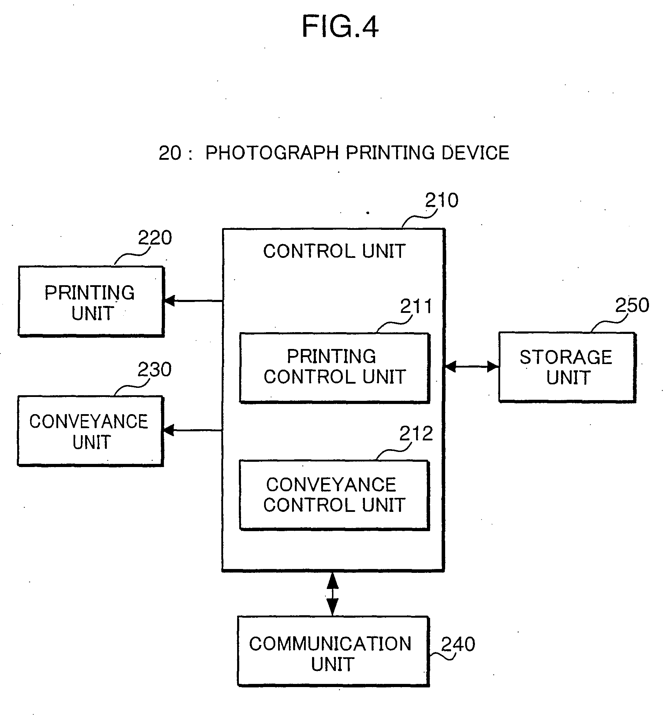

Fig. 4 is a block diagram of the photograph printing device 20 shown in Fig. 1. The photograph printing device 20 includes a control unit 210, a printing unit 220, a conveyance unit 230, a communication unit 240, and a storage unit 250. The control unit 210 is constituted by a CPU, for example, and is responsible for overall control of the photograph printing device 20. The control unit 210 includes a printing control unit 211 and a conveyance control unit 212.

The printing control unit 211 receives printing output request information transmitted from the management server 40, and controls the printing unit 220 in accordance with the received printing output request information such that printed photographs are output by the printing unit 220 in order units.

Fig. 12 is a view showing an example of a data structure of the printing output request information. The printing output request information includes columns relating to order number, image data, and number of prints. These columns store the information stored in the corresponding columns of the order notification number shown in Fig. 11. Here, the printing control unit 211 causes the printing unit 220 to output the printed photographs in sequence from the order having the lowest order number.

Further, the printing control unit 211 stores the received printing output request information in the storage unit 250 until the printed photographs relating to the printing output request information have been output.

The conveyance control unit 212 controls the conveyance unit 230 such that a sheet of paper is conveyed to the printing unit 220 when the printing control unit 211 causes the printing unit 220 to perform a printing operation. The printing unit 220 includes an inkjet head, for example, and prints an image on the sheet of paper conveyed by the conveyance unit 230 under the control of the printing control unit 211.

The communication unit 240 is constituted by a communication device conforming to a LAN communication protocol, and serves as a communication interface with the various devices connected to the LAN. In this embodiment in particular, the communication unit 240 receives the printing output request information from the management server 40.

The storage unit 250 is constituted by a rewritable non-volatile memory, for example, and stores the printing output request information under the control of the printing control unit 211.

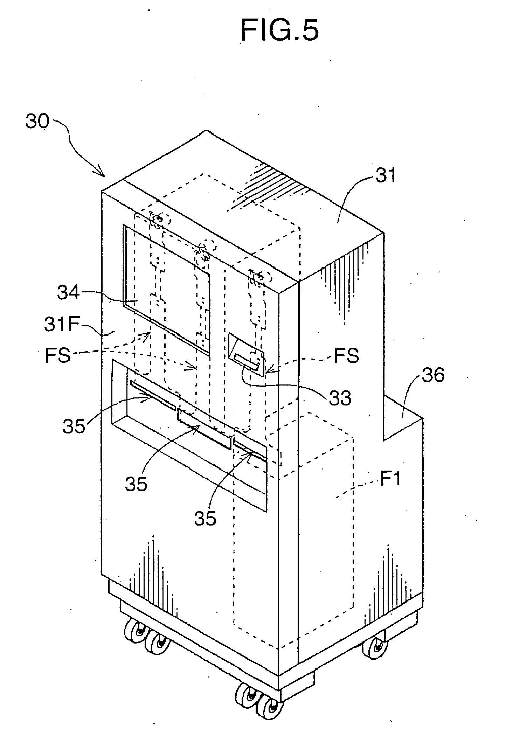

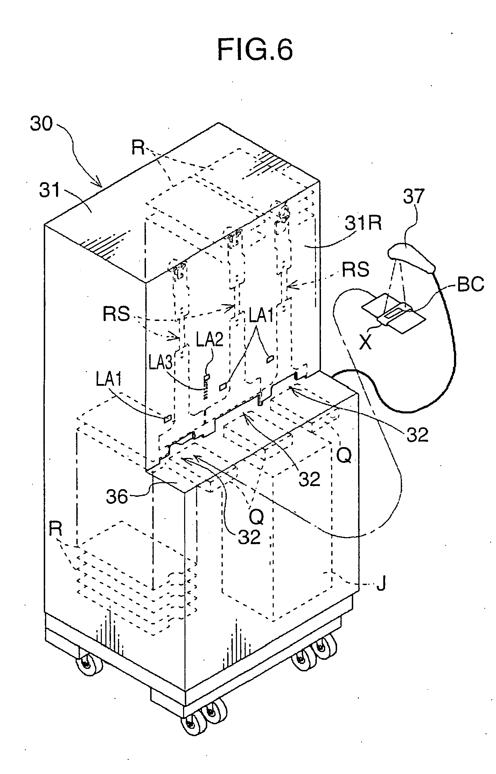

Figs. 5 and 6 are external constitutional diagrams of the delivery device 30 shown in Fig. 1. As shown in Figs. 5 and 6, printed photographs bound by a band X and inserted through an insertion opening 32 formed in a rear surface 31R (rear side) of a housing 31 of the delivery device 30 are carried on one rack R in the interior of the housing 31. When the user holds the reception voucher V against a fixed barcode reader 33 provided on a front surface 31F (front side), the delivery device 30 reads the barcode printed on the reception voucher V to obtain the order number.

The delivery device 30 then specifies, from the obtained order number, the rack R carrying the printed photographs relating to the order number, positions the specified rack R in a discharge opening 35 formed in the front surface 31F of the housing 31, and slides a push-out mechanism Q to the front side such that the printed photographs carried on the rack R are discharged from the discharge opening 35. Thus, the user can receive the ordered printed photographs.

Here, the band X is wound around the printed photographs of each order, whereupon the printed photographs are inserted into the insertion opening 32 by a staff member of the photograph developing store. Further, a barcode BC indicating the order number, the order number, the user name, and so on are printed on the band X. The staff member uses the barcode reader 37 to read the barcode BC when inserting the printed photographs, thereby enabling the delivery device 30 to obtain the order number. Further, a rack address is allocated to each rack R.

Hence, when the printed photographs are inserted, the delivery device 30 can associate the order number obtained by the barcode reader 37 with the rack address of the rack R carrying the printed photographs, and thus the delivery device 30 can manage the racks R and the order numbers of the printed photographs carried thereon.

A front portion shutter FS opens and closes the discharge opening 35. A rear portion shutter RS opens and closes the insertion opening 32. A table portion 36 guides the printed photographs bound by the band X to the insertion opening 32. Amonitor 34 displays various images prompting the user to receive the printed photographs. An elevation frame F1 raises and lowers the racks R. An insertion position guidance lamp LA1 shows the staff member the insertion opening 32 into which the printed photographs should be inserted. In this embodiment, three racks R are provided in series, and therefore three insertion openings 32 and three discharge openings 35 are provided.

A reception operation lamp LA2 is illuminated when the user performs an operation to extract the printed photographs. A full lamp LA3 is illuminated when no empty racks R are available. A control unit J is responsible for overall control of the delivery device 30.

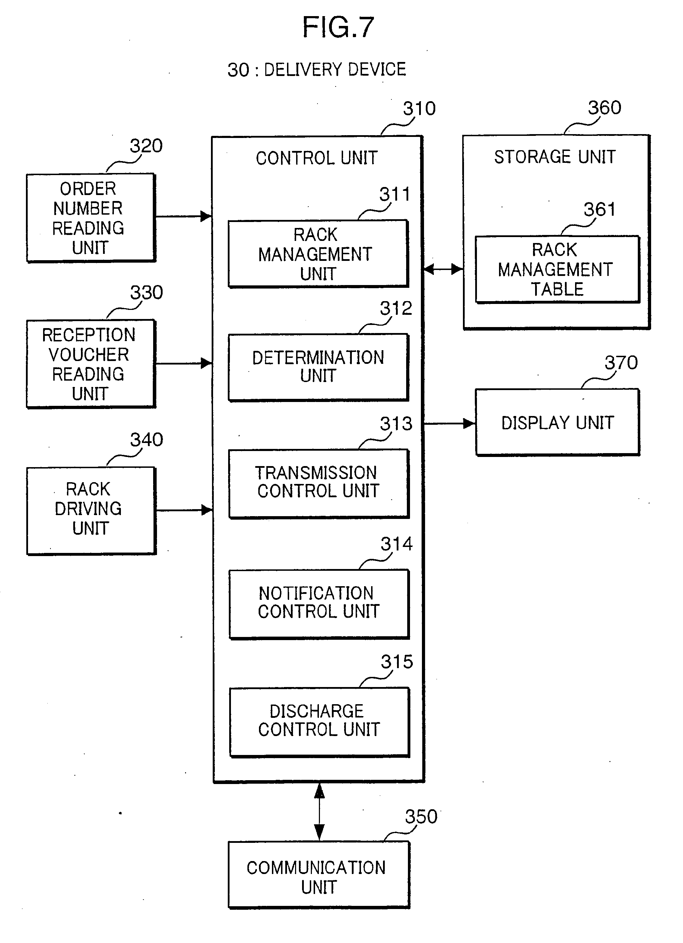

Fig. 7 is a block diagram of the delivery device 30. The delivery device 30 includes a control unit 310, an order number reading unit 320, a reception voucher reading unit 330 (an example of an acquisition unit), a rack driving unit 340, a communication unit 350, a storage unit 360, and a display unit 370 (an example of a notification unit).

The order number reading unit 320 is constituted by the barcode reader 37 shown in Fig. 6, and under the control of the control unit 310, the order number reading unit 320 reads a barcode BC printed on the band X to obtain the order number. More specifically, the order number of printed photographs inserted by hand is read by the barcode reader 37, whereupon the order number and the position of the rack R of the delivery device 30 into which the printed photographs are inserted are stored.

The reception voucher reading unit 330 is constituted by the fixed barcode reader 33 shown in Fig. 5, and under the control of the control unit 310, the reception voucher reading unit 330 reads the barcode printed on the reception voucher V to obtain the order number. Hereafter, an order relating to the order number read by the reception voucher reading unit 330 will be referred to as a subject order.

The control unit 310 is constituted by a control unit J, for example, and includes a rack management unit 311, a determination unit 312, a transmission control unit 313 (an example of a transmission unit), a notification control unit 314 (an example of the notification unit), and a discharge control unit 315. Once the order number has been obtained by the order number reading unit 320, the rack management unit 311 specifies a single empty rack R on which to carry the printed photographs, and stores a rack address allocated to the rack R in a rack management table 361 in association with the order number obtained by the order number reading unit 320, thereby managing the rack management table 361. The rack management table 361 stores the rack addresses and the order numbers associated with the respective rack addresses.

After obtaining the order number relating to the subject order, which is read by the reception voucher reading unit 330, the determination unit 312 determines whether or not the printed photographs relating to the subject order are housed in the rack R. Here, for example, the determination unit 312 determines that the printed photographs relating to the subject order are housed in the rack R when the order number relating to the subject order exists in the rack management table 361, and determines that the printed photographs relating to the subject order are not housed in the rack R when the order number relating to the subject order does not exist in the rack management table 361.

When the determination unit 312 determines that the printed photographs relating to the subject order are not housed in the rack R, the transmission control unit 313 transmits a request to calculate an expected time to housing to the management server 40. Further, the transmission control unit 313 generates a housing completion notification and transmits it to the management server 40 every time printed photographs relating to an order are housed. For example, when the order number is read by the order number reading unit 320 and written into the rack management table 361 by the rack management unit 311, the transmission control unit 313 may generate a housing completion notification including the order number and transmit the generated housing completion notification to the management server 40.

Further, when discharge of the printed photographs relating to a certain order is completed by the discharge control unit 315, the transmission control unit 313 generates a delivery completion notification indicating that delivery of the printed photographs relating to the order to the user is complete, and transmits the generated delivery completion notification to the management server 40.

The notification control unit 314 notifies the user of the expected time to housing transmitted from the management server 40 as an expected time to delivery of the printed photographs relating to the subject order. Here, the notification control unit 314 notifies the user of the expected time to delivery by generating a notification image indicating the expected time to delivery and displaying the generated notification image on the display unit 370.

When the determination unit 312 determines that the printed photographs relating to the subject order are housed in the rack R, the discharge control unit 315 specifies the rack R having the rack address that is associated with the order number of the subject order by referring to the rack management table 361, and controls the rack driving unit 340 such that the specified rack R is positioned in the discharge opening 35. The discharge control unit 315 then controls the rack driving unit 340 such that the printed photographs that are carried on the rack R positioned in the discharge opening 35 are discharged.

The rack driving unit 340 is constituted by an elevation frame F1 shown in Figs. 5 and 6, a motor (not shown) for causing the elevation frame F1 to raise and lower the rack R, a push-out mechanism Q, a motor (not shown) for sliding the push-out mechanism Q, and so on, and under the control of the control unit 310, the rack driving unit 340 performs positioning of the rack R and discharge of the printed photographs.

The communication unit 350 is constituted by a communication device that conforms to the LAN communication protocol, and serves as a communication interface with the various devices connected to the LAN. In this embodiment in particular, the communication unit 350 transmits the request to calculate the expected time to housing, the housing completion notification, and the delivery completion notification to the management server 40, and receives the expected time to housing from the management server 40.

The storage unit 360 is constituted by a rewritable non-volatile storage device, for example, and stores the rack management table 361.

The display unit 370 is constituted by a monitor 34 shown in Fig. 5, and under the control of the notification control unit 314, the display unit 370 displays the notification image indicating the expected time to housing and notifies the user of the expected time to delivery.

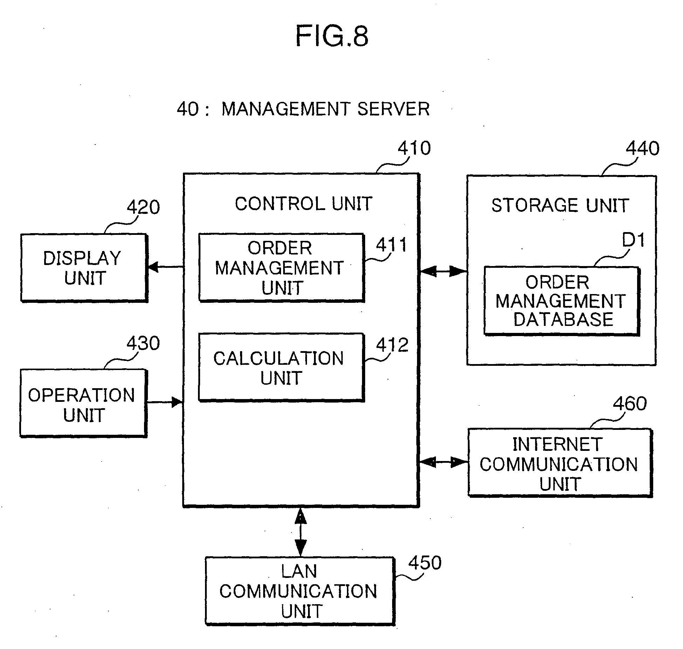

Fig. 8 is a block diagram of the management server 40 shown in Fig. 1. The management server 40 includes a control unit 410, a display unit 420, an operation unit 430, a storage unit 440, a LAN communication unit 450, and an Internet communication unit 460. The control unit 410 is constituted by a CPU, for example, and is responsible for overall control of the management server 40. The control unit 410 includes an order management unit 411 and a calculation unit 412.

After receiving an order number attachment request transmitted from the reception device 10, the order management unit 411 attaches an order number, generates an order number attachment notification, and transmits the generated order number attachment notification to the reception device 10. Note that in this embodiment, a steadily larger numeral is allocated to the order number as the order becomes more recent, for example.

Further, the order management unit 411 attaches an order number in a similar manner upon reception of an order number attachment request from the terminal device 50.

Further, after receiving the order notification information shown in Fig. 11 from the reception device 10, the order management unit 411 manages the order by creating an order management database D1 in which the information stored in the respective columns of the received order notification information is stored associatively.

More specifically, upon reception of the order notification information, the order management unit 411 creates a single record for the order relating to the received order notification information, and stores the information stored in the respective columns of the order notification information in the corresponding columns of the created record.

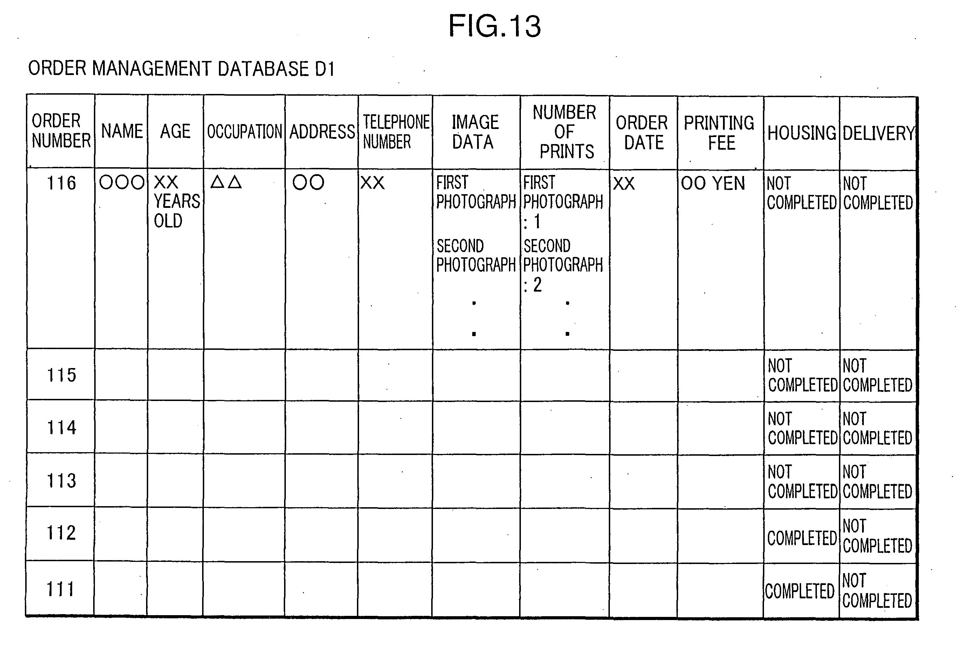

Fig. 13 is a view showing an example of a data structure of the order management database D1 stored by the storage unit 440. As shown in Fig. 13, the order management database D1 is constituted by a relational database in which a single record is allocated to each order, and includes columns relating to order number, name, age, occupation, address, telephone number, image data, number of prints, order date, printing fee, housing, and delivery. Note that these columns are examples and may be omitted or supplemented with other columns. Further, in Fig. 13, the information stored in the columns other than the housing and delivery columns has been omitted from all orders other than an order having an order number 116.

The order number is stored in the order number column. The name of the user relating to the order is stored in the name column. The age of the user relating to the order is stored in the age column. The address of the user relating to the order is stored in the address column. The telephone number of the user relating to the order is stored in the telephone number column. The ordered image data are stored in the image data column. The number of prints of each set of the ordered image data is stored in the print number column. In the case shown in Fig. 13, one print of a first set of image data and two prints of a second set of image data have been ordered in the order having the order number 116.

The time, day, month and year of order reception are stored in the order date column. The printing fee for the order is stored in the printing fee column. Information indicating whether or not the printed photographs have been housed in the delivery device 30 is stored in the housing column. In the case shown in Fig. 13, the printed photographs relating to orders having order numbers 111 and 112 have been housed in the delivery device 30, and therefore "completed" is stored in the housing column. The printed photographs relating to orders having order numbers 113 to 116 have not been housed in the delivery device 30, on the other hand, and therefore "not completed" is stored in the housing column.

Information indicating whether or not the printed photographs relating to the order have been delivered to the user by the delivery device 30 is stored in the delivery column. In the case shown in Fig. 13, the printed photographs relating to the order numbers 111 to 116 have not been delivered, and therefore "not completed" is stored in the delivery column. When delivery of the printed photographs is complete, on the other hand, "completed" is stored in the delivery column. Note that when a predetermined period of time has elapsed after "completed" is stored in the delivery column, the order management unit 411 may delete the "completed" order.

Returning to Fig. 8, the order management unit 411 transmits printing output request information for causing the photograph printing device 20 to output the printed photographs. Here, the order management unit 411 transmits the printing output request information in the sequence in which the orders are received by the reception device 10, or in other words in order number sequence.

Further, after receiving the housing completion notification from the delivery device 30, the order management unit 411 specifies a corresponding record of the order management database D1 from the order number stored in the housing completion notification, and updates the housing column of the specified record from "not completed" to "completed".

Further, after receiving the delivery completion notification from the delivery device 30, the order management unit 411 specifies a corresponding record of the order management database D1 from the order number stored in the delivery completion notification, and updates the information stored in the delivery column of the specified record from "not completed" to "completed".

After receiving a request from the delivery device 30 to calculate the expected time to housing required to house the printed photographs relating to the subject order in the delivery device 30, the calculation unit 412 calculates the expected time to housing on the basis of the order management database D1, and transmits the calculated expected time to housing to the delivery device 30.

Here, the calculation unit 412 calculates the expected time to housing in the following manner, for example. First, the calculation unit 412 specifies, from the order management database D1, a number of undelivered orders received before the subject order but not housed in the delivery device 30.

In the case shown in Fig. 13, the order having the order number 116 is the subject order (the order for which the user has the fixed barcode reader 33 of the delivery device 30 read the reception voucher V), and "not completed" is stored in the housing column of the orders having the order numbers 113 to 115, and therefore the number of undelivered orders is three.

Next, the calculation unit 412 calculates a total number of printed photographs included in the undelivered orders and the subject order from the number of prints of each set of image data stored in the print number column of the order management database D1, and then calculates a total processing time, which is obtained by multiplying a predetermined processing time T1 required for the photograph printing device 20 to print a single photograph by the total number of printed photographs, as the expected time to housing.

In the case shown in Fig. 13, twenty-four printed photographs are included in each of the orders having the order numbers 113 to 116, and therefore the total number of printed photographs included in the undelivered orders and the subject order is 24 x 4 = 96. Hence, the expected time to housing is 96 x T1. Note that a value obtained by actual measurement may be employed as the processing time T1.

Further, the calculation unit 412 may calculate the expected time to housing by adding, to the total processing time, an adjustment value, which is obtained by multiplying the sum of the undelivered orders and the subject order by a predetermined movement time T2 required for the printed photographs of a single order to be housed in the delivery device 30 following output from the photograph printing device 20. Note that a value obtained by actual measurement may be employed as the movement time T2.

In the case shown in Fig. 13, the sum of the undelivered orders and the subject order is four, and therefore the adjustment value is 4 × T2. Hence, a value obtained by adding the total processing time to the adjustment value may be set as the expected time to housing.

The display unit 420 is constituted by a display device such as a liquid crystal display or a plasma display, and displays various information under the control of the control unit 410. The operation unit 430 is constituted by an input device such as a keyboard or a mouse, and receives various operation commands from the user. The storage unit 440 is constituted by, for example, a hard disk, and stores the order management database D1.

The LAN communication unit 450 is constituted by a communication device that conforms to the LAN communication protocol, and serves as a communication interface with the various devices connected to the LAN. In this embodiment in particular, the LAN communication unit 450 receives the order number attachment request and the order notification information transmitted from the reception device 10, the delivery completion notification transmitted from the delivery device 30, and the printing output completion notification transmitted from the photograph printing device 20, and transmits the order number attachment notification to the reception device 10 and the printing output request information to the photograph printing device 20.

The Internet communication unit 460 is constituted by a communication device that conforms to an Internet communication protocol, and serves as a communication interface with the various devices connected to the network NT. In this embodiment in particular, the Internet communication unit 460 receives the order notification information transmitted from the terminal device 50.

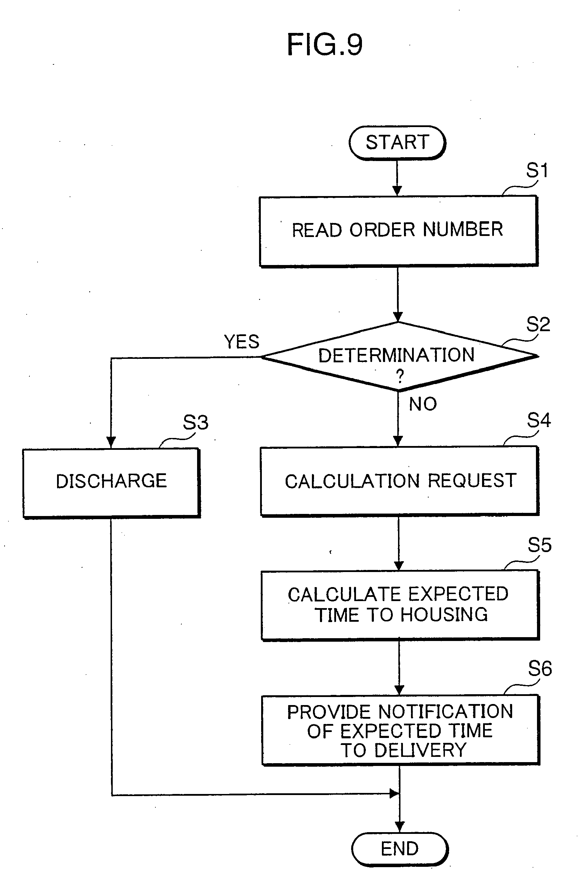

Fig. 9 is a flowchart showing an operation performed by the photograph printing system during calculation of the expected time to delivery. First, the delivery device 30 reads the barcode of the reception voucher V that is held against the fixed barcode reader 33, thereby obtaining the order number of the subject order (step S1).

Next, the delivery device 30 determines whether or not the printed photographs relating to the subject order are housed in the rack R (step S2). Next, after determining that the printed photographs relating to the subject order are not housed in the rack R (NO in the step S2), the delivery device 30 transmits a request to calculate the expected time to housing to the management server 40 (step S4).

Next, the management server 40 calculates the expected time to housing of the subject order and transmits the calculated expected time to housing to the delivery device 30 (step S5). Next, the delivery device 30 informs the user of the expected time to delivery by displaying the expected time to housing on the display unit 130 as the expected time to delivery (step S6).

Here, the delivery device 30 may inform the user of an expected delivery time instead of , or in addition to, the expected time to delivery. In this case, the delivery device 30 is provided with a time measurement function so that an expected housing time can be calculated by adding the expected time to housing calculated by the management server 40 to a time at which the order number of the subject order was read. Further, the delivery device 30 may inform the user of at least one of the expected time to housing and the expected housing time by voice. In this case, the delivery device 30 should be provided with a speaker and a voice reproduction device for outputting a voice through the speaker.

After determining in the step S2 that the printed photographs relating to the subject order are housed in the rack R (YES in the step S2), the delivery device 30 discharges the printed photographs (step S3).

According to this photograph printing system, when an order number is obtained by the delivery device 30 and the printed photographs of a subject order relating to the order number are not housed, an expected time to housing required to house the printed photographs in the delivery device 30 is calculated, and the user is notified of this expected time to housing as an expected time to delivery.

By informing the user of the expected time to delivery, the user is given the chance to consider receiving the printed photographs after completing other purchases or waiting in the vicinity of the delivery device 30 to receive the printed photographs, and thus a photograph printing system that is convenient for the user can be provided.

Further, the user can check the expected time to delivery as many times as he/she wishes simply by holding the reception voucher V against the barcode reader 33 of the delivery device 30, and therefore the expected time to delivery can be confirmed more easily than in a case where the user asks a staff member to confirm the expected time to delivery. Furthermore, the staff member is released from the work involved in checking the expected time to delivery, and therefore the user can be informed of the expected time to delivery without fuss.

Note that in the embodiment described above, a constitution in which the printed photographs are delivered to the user wrapped in the band X was employed, but the present invention is not limited thereto, and the printed photographs may be delivered to the user in a carrier bag used conventionally in photograph developing stores.

Further, in the embodiment described above, a case in which a staff member of the photograph developing store wraps the band X around the printed photographs output from the photograph printing device 20 and then houses the wrapped printed photographs in the delivery device 30 was described, but the present invention is not limited thereto. More specifically, the present invention may also be applied to a recently proposed photograph printing system in which a wrapping device that receives the printed photographs output from the photograph printing device, binds the received printed photographs with the band X or inserts the received printed photographs in a carrier bag, and conveys the printed photographs to the delivery device 30 is disposed between the photograph printing device 20 and the delivery device 30 such that the processes from reception of the printed photographs to delivery to the user are performed automatically. In this case, an actually measured value required to convey the printed photographs of a single order to the delivery device 30 following reception thereof by the delivery device 30 from the photograph printing device 20 may be employed as the movement time T2.

Further,in the embodiment described above, a constitution in which the delivery device 30 obtains the order number by reading the reception voucher V using the fixed barcode reader 33 was employed, but a constitution in which the order number is obtained by having the user input the order number may be employed. For example, when the user places an order from the terminal device 50, the reception voucher V is not issued, but by having the user input the order number, the delivery device 30 can obtain the order number of an order placed from the terminal device 50.

Further, the expected time to delivery of the printed photographs described in the above embodiment typically indicates the time remaining until the printed photographs of the subject order are delivered to the user from the delivery device 30, but the technical spirit of the present invention is not limited thereto, and includes a constitution in which the time at which the printed photographs can actually be received is displayed.

Further, in the embodiment described above, the management server 40 is constituted independently of the reception device 10, the photograph printing device 20, and the delivery device 30, but the present invention is not limited thereto. More specifically, the management server 40 may be provided in a dispersed manner as a part of the plurality of reception devices 10, annexed to the delivery device 30, or provided in the interior of the delivery device 30. In other words , although the functions of each block are divided in the above description, the respective blocks do not have to be independent in an actual system.

The technical features of the photograph printing system described above may be summarized as follows.
(1) The photograph printing system according to the present invention is a photograph printing system in which a reception device for receiving an order for photograph printing, a management server for managing the order, a photograph printing device for outputting printed photographs relating to the order, and a delivery device for delivering the printed photographs to a user in order units are connectedvia a predetermined network, wherein the management server includes: an order management unit that manages the orders by creating an order management database indicating whether or not printed photographs relating to respective orders have been housed in the delivery device when the printed photographs relating to each order are housed in the delivery device; and a calculation unit that calculates an expected time to housing required to house printed photographs relating to a single subject order in the delivery device on the basis of the order management database upon reception of a request to calculate the expected time to housing from the delivery device, and transmits the calculated expected time to housing to the delivery device, and the delivery device comprises: a housing unit that houses the printed photographs in order units; an acquisition unit that obtains an identification code attached in advance to identify the subject order; a determination unit that determines whether or not the printed photographs relating to the subject order have been housed in the housing unit when the identification code relating to the subject order is obtained by the acquisition unit; a transmission unit that transmits the request to calculate the expected time to housing to the management server when the determination unit determines that the printed photographs relating to the subject order have not been housed in the housing unit; and a notification unit that notifies the user of the expected time to housing transmitted from the management server as an expected time to delivery of the printed photographs relating to the subject order.
   According to this constitution, when the identification code is obtained by the delivery device and the printed photographs of the subject order having the identification code have not been housed, an expected time to housing required for the printed photographs to be housed in the delivery device is calculated, and the user is informed of the expected time to housing as an expected time to delivery.
   By informing the user of the expected time to delivery, the user is given the chance to consider receiving the printed photographs after completing other purchases or waiting in the photograph developing store to receive the printed photographs, and thus a photograph printing system that is convenient for the user can be provided.
   Furthermore, the user can check the expected time to delivery as many times as he/she wishes simply by providing the delivery device with the identification code, and therefore the expected time to delivery can be confirmed more easily than in a case where the user asks a staff member to confirm the expected time to delivery. Moreover, the staff member is released from the work involved in checking the expected time to delivery, and therefore the user can be informed of the expected time to delivery without fuss.
(2) The printed photographs are preferably housed in the delivery device in sequence of the orders received by the reception device, and the calculation unit preferably calculates the expected time to housing by specifying a number of undelivered orders received before the subject order but not housed in the delivery device from the order management database.
   According to this constitution, the expected time to housing is calculated by specifying the number of undelivered orders that were received before the subject order but have not been housed in the delivery device, and therefore, the expected time to delivery can be calculated accurately.
(3) The reception device preferably further comprises an order reception unit that receives information indicating a number of printed photographs upon reception of an order and transmits the information to the management server. The order management unit preferably stores the number information in the order management database. The calculation unit preferably calculates a total number of printed photographs included in the undelivered orders and the subject order from the number information stored in the order management database, and calculates the expected time to housing on the basis of a total processing time obtained by multiplying a predetermined processing time required for the photograph printing device to output a single printed photograph by the total number.
   According to this constitution, the total number of [printed photographs included in] the undelivered orders and the subject order is calculated from the number information stored in the order management database, and the expected time to housing is calculated on the basis of the total processing time obtained by multiplying the predetermined processing time required for the photograph printing device to output a single printed photograph by the total number. Therefore, the expected time to housing can be calculated accurately.
(4) The calculation unit preferably calculates the expected time to housing by adding, to the total processing time, an adjustment value, which is obtained by multiplying a sum of the undelivered orders and the subject order by a predetermined movement time required for the printed photographs of a single order to be housed in the delivery device following output from the photograph printing device.
   According to this constitution, the expected time to housing is calculated by adding, to the total processing time, the adjustment value, which is obtained by multiplying the sum of the undelivered orders and the subject order by the predetermined movement time required for the printed photographs of a single order to be housed in the delivery device following output from the photograph printing device, and therefore the expected time to delivery can be calculated accurately.
(5) The reception device preferably further comprises an issuing unit that issues a reception voucher in which an order number relating to the printed photographs is printed on a sheet of paper, and the acquisition unit of the delivery device preferably reads the order number printed on the reception voucher as the identification code.
   According to this constitution, the user can receive the ordered printed photographs simply by having the delivery device read the order number printed on the reception voucher that is issued during order placement.
(6) The issuing unit of the reception device preferably prints the order number on the reception voucher in a barcode form, and the acquisition unit of the delivery device is preferably constituted by a barcode reader for reading the order number printed on the reception voucher in the barcode form.
   According to this constitution, the delivery device reads the order number printed on the reception voucher in the barcode form using the barcode reader, and therefore the order number can be read accurately.
(7) The notification unit of the delivery device preferably displays a notification image indicating the expected time to housing.
   According to this constitution, the notification image indicating the expected time to housing is displayed, and therefore the user can check the expected time to housing at a glance.
(8) The housing unit of the delivery device preferably comprises a plurality of racks to which rack addresses are allocated, and which house the printed photographs in order units , and the delivery device preferably further comprises a storage unit for storing a rack management table in which the identification code is stored in association with the rack address of the rack housing the printed photographs relating to the identification code.
   According to this constitution, the rack management table in which the identification code and the rack address are associated is provided, and therefore the delivery device can identify the rack housing the printed photographs relating to the identification code accurately and speedily from the identification code.
(9) When the identification code relating to the subject order exists in the rack management table, the determination unit of the delivery device preferably determines that the printed photographs relating to the subject order are housed in the housing unit.
   According to this constitution, the determination as to whether or not the printed photographs relating to the subject order are housed in the housing unit can be made quickly.
(10) The delivery device preferably further comprises: a discharge opening for discharging the printed photographs; a rack driving unit that positions the rack in the discharge opening; and a discharge control unit that specifies a rack having a rack address that is associated with the identification code of the subject order by referring to the rack management table, and controls the rack driving unit such that the specified rack is positioned in the discharge opening.

According to this constitution, the rack housing the printed photographs of the subject order is positioned in the discharge opening such that the printed photographs are discharged from the discharge opening.

This application is based on Japanese patent application serial no. 2008-087476, filed in Japan Patent Office on March 28, 2008, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A photograph printing system in which a reception device for receiving an order for photograph printing, a management server for managing the order, a photograph printing device for outputting printed photographs relating to the order, and a delivery device for delivering the printed photographs to a user in order units are connected via a predetermined network, wherein the management server comprises:
an order management unit that manages the orders by creating an order management database indicating whether or not printed photographs relating to respective orders have been housed in the delivery device when the printed photographs relating to each order are housed in the delivery device; and
a calculation unit that calculates an expected time to housing required to house printed photographs relating to a single subject order in the delivery device on the basis of the order management database upon reception of a request to calculate the expected time to housing from the delivery device, and transmits the calculated expected time to housing to the delivery device, and
the delivery device comprises:
a housing unit that houses the printed photographs in order units;
an acquisition unit that obtains an identification code attached in advance to identify the subject order;
a determination unit that determines whether or not the printed photographs relating to the subject order have been housed in the housing unit when the identification code relating to the subject order is obtained by the acquisition unit;
a transmission unit that transmits the request to calculate the expected time to housing to the management server when the determination unit determines that the printed photographs relating to the subject order have not been housed in the housing unit; and
a notification unit that notifies the user of the expected time to housing transmitted from the management server as an expected time to delivery of the printed photographs relating to the subject order.

2. The photograph printing system according to claim 1, wherein the printed photographs are housed in the delivery device in sequence of the orders received by the reception device, and
the calculation unit calculates the expected time to housing by specifying a number of undelivered orders received before the subject order but not housed in the delivery device from the order management database.

3. The photograph printing system according to claim 1 or 2, wherein the reception device further comprises an order reception unit that receives information indicating a number of printed photographs upon reception of an order and transmits the information to the management server,
the order management unit stores the number information in the order management database, and
the calculation unit calculates a total number of printed photographs included in the undelivered orders and the subject order from the number information stored in the order management database, and calculates the expected time to housing on the basis of a total processing time obtained by multiplying a predetermined processing time required for the photograph printing device to output a single printed photograph by the total number.

4. The photograph printing system according to claim 2 or 3, wherein the calculation unit calculates the expected time to housing by adding, to the total processing time, an adjustment value, which is obtained by multiplying a sum of the undelivered orders and the subject order by a predetermined movement time required for the printed photographs of a single order to be housed in the delivery device following output from the photograph printing device.

5. The photograph printing system according to any of claims 1 to 4, wherein the reception device further comprises an issuing unit that issues a reception voucher in which an order number relating to the printed photographs is printed on a sheet of paper, and
the acquisition unit of the delivery device reads the order number printed on the reception voucher as the identification code.

6. The photograph printing system according to any of claims 1 to 5, wherein the issuing unit of the reception device prints the order number on the reception voucher in a barcode form, and
the acquisition unit of the delivery device is constituted by a barcode reader for reading the order number printed on the reception voucher in the barcode form.

7. The photograph printing system according to any of claims 1 to 6, wherein the notification unit of the delivery device displays a notification image indicating the expected time to housing.

8. The photograph printing system according to any of claims 1 to 7, wherein the housing unit of the delivery device comprises a plurality of racks to which rack addresses are allocated, and which house the printed photographs in order units, and
the delivery device further comprises a storage unit for storing a rack management table in which the identification code is stored in association with the rack address of the rack housing the printed photographs relating to the identification code.

9. The photograph printing system according to claim 8, wherein, when the identification code relating to the subject order exists in the rack management table, the determination unit of the delivery device determines that the printed photographs relating to the subject order are housed in the housing unit.

10. The photograph printing system according to claim 8 or 9, wherein the delivery device further comprises:
a discharge opening for discharging the printed photographs;
a rack driving unit that positions the rack in the discharge opening; and
a discharge control unit that specifies a rack having a rack address that is associated with the identification code of the subject order by referring to the rack management table, and controls the rack driving unit such that the specified rack is positioned in the discharge opening.
